(19) Europäisches Patentamt
European Patent Office
Office européen des brevets

(11) **EP 3 833 011 A1**

(12) # EUROPEAN PATENT APPLICATION

(43) Date of publication:
**09.06.2021 Bulletin 2021/23**

(51) Int Cl.:
**H04N 5/91** *(2006.01)*  **G01R 23/00** *(2006.01)*
**G11B 27/28** *(2006.01)*  **H04N 5/913** *(2006.01)*

(21) Application number: **19383083.3**

(22) Date of filing: **05.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Universidad de Vigo**
**36310 Vigo (Pontevedra) (ES)**

(72) Inventors:
• **FERNÁNDEZ MENDUIÑA, Samuel**
**36142 Vilaboa (Pontevedra) (ES)**
• **PÉREZ GONZÁLEZ, Fernando**
**36211 Vigo (ES)**

(74) Representative: **Cueto, Sénida**
**C/ Los Madroños 23**
**Velilla de San Antonio**
**28891 Madrid (ES)**

(54) **METHOD AND SYSTEM FOR THE EXTRACTION OF ELECTRIC NETWORK FREQUENCY SIGNALS FROM DIGITAL VIDEOS**

(57) The present invention refers to a method and system for the extraction of the electrical network frequency signals from videos taken by digital cameras, comprising a video processor which operates individually over each pixel to mitigate the effects of movement and produces a temporal sequence; a preconditioner which enhances such temporal sequence, this preconditioning including linear and non-linear operations; and an instantaneous frequency estimator which uses feedback to determine the signal of frequency variations over time and post-processes such signal in order to allow for a comparison with a ground-truth.

FIG. 1

**Description**

**Field of the invention**

The present invention relates to the field of digital video forensics, specifically to methods and systems based on the electrical network frequency, also known as ENF.

**Background of the invention**

The electrical network frequency criterion, and in particular its utilization with digital videos, is a field that attracts attention because it is an enabling technology for many forensic applications, ranging from the estimation of the time of recording to the detection of inconsistencies between sequences of images and audio tracks in a video. Said applications rely on a method that extracts the electrical network frequency from the digital video. Currently, the central step in said extraction procedure is the instantaneous frequency estimation method that computes the time-varying frequency from the time-domain sequence. Some of these methods are exemplified below.

In the article by A. Hajj-Ahmad et al., "Instantaneous frequency estimation and localization for ENF signals," Proceedings of The 2012 Asia Pacific Signal and Information Processing Association Annual Summit and Conference, Hollywood, CA, 2012, pp. 1-10, the basic techniques for instantaneous frequency estimation are described. Among them, the MUSIC and ESPRIT methods have proven to be the most reliable options, providing more resolution than other methods as those based on the Short-Time Fourier Transform. Said instantaneous frequency estimators are based on the orthogonality properties of the subspace generated by the carriers corresponding to the desired part of the signal under analysis and the noise; thus, said techniques require a high Signal to Noise ratio to separate the subspaces and estimate the frequency, which may not be the case with digital videos, especially if changes in the scene, such as variations in the illumination, or presence of dark areas, are involved, as they increase the noise level in the time-domain sequence.

In the article by O. Ojowu et al., "ENF Extraction From Digital Recordings Using Adaptive Techniques and Frequency Tracking," in IEEE Transactions on Information Forensics and Security, vol. 7, no. 4, pp. 1330-1338, Aug. 2012, an adaptive technique using a tracking step is proposed, which employs a dynamic method to provide high accuracy in the estimation but sacrificing computational efficiency; then the performance of said approach is measured for a database of audio recordings. In addition, a comparison with mainstream instantaneous frequency estimation methods is carried out, where it is shown that applying tracking schemes before the subspace-based estimation techniques mentioned above may be beneficial when estimating the electrical network frequency from audio recordings with low Signal to Noise ratio or under interferences. Nonetheless, the authors focus on discrete dynamic programming as a tracking scheme and on audio tracks, without any analysis of the extraction from digital videos, which due to the effects of aliasing (as the frame rate is often not sufficient for this application) and the changes in the scene, such as variations in the illumination, or presence of dark areas, represents a completely different scenario, where further and more efficient processing is necessary prior to the instantaneous frequency estimation.

One alternative, which performs the estimation considerably faster than the methods exposed before with similar quality in the estimation is presented in the article by L. Dosiek, "Extracting Electrical Network Frequency From Digital Recordings Using Frequency Demodulation," in IEEE Signal Processing Letters, vol. 22, no. 6, pp. 691-695, June 2015, even though the method exposed therein focuses, as the alternatives exposed before, in audio recordings and still relies on the assumption that the signal to noise ratio is high enough. Nonetheless, unlike the other methods, said technique requires knowledge of the normalized center frequency of the signal, which is a function of the frame rate, that in turn may be unknown or may vary due to a plurality of phenomena. In addition, the idea of using a feedback step for computing the electrical network frequency is mentioned, but neither further developed nor analyzed as a specific type of tracking scheme suitable for the electrical network frequency estimation.

The phase lock loop is perfectly suited for the scenario of non-static videos, as sporadic movements originate isolated discontinuities that can be easily overcome, improving the results of the estimation. Phase lock loop schemes have been already proposed in the electrical network frequency field, but with the objective of detecting discontinuities in the video recording, as in the article by M. Fuentes et al., "Detection of ENF discontinuities using PLL for audio authenticity," 2016 IEEE 7th Latin American Symposium on Circuits & Systems (LASCAS), Florianopolis, 2016, pp. 79-82, which is different from the estimation problem addressed in the present invention and requires different implementations.

In case the movement in the scene is considerable and not just a sporadic appearance in few frames, the former being the most common scenario, previously mentioned instantaneous frequency estimation processes fail to extract the electrical network frequency from the sequence obtained by averaging the luminance of all of the pixels of each frame. Employing video processing stages to preprocess the data, aiming to mitigate as much as possible the variations introduced by the movement, is necessary on said scenarios. CN103905816B discloses a video processing method to detect video tampering that splits each frame into two parts: the stationary background and the moving foreground, considering as representative only the pixels which remain in the background of all the frames for the total length of the video. This proposal, while effective in quasi-static scenarios, is suboptimal and unsuitable for dynamic videos, as the number of available pixels may be insufficient.

In the Master's Thesis of Vlad Dragos-Darau, "Temporal localization of videos based on massive ENF processing", University of Vigo, Vigo, June 2018, the same concept of splitting the background and the foreground is followed but considering, in a frame by frame basis, all the pixels that belong to the background, adapting to the changes in the scene. Nonetheless, since each pixel has a contribution to the average value of the luminance, removing some of them introduces variations which produce discontinuities. Also, US2018205922A1 patent application discloses a method that can obtain the electrical network frequency from a frame containing at least one moving object; nonetheless, it does not comprise a video processing module that could provide robustness to the system, encompassing only the instantaneous frequency estimation step, with the disadvantages regarding dynamic scenes already discussed.

None of the previously mentioned methods takes into account that in some parts of the video, pixels may not convey information about the variations of the electrical network frequency, providing only noise to the final result. A process for detecting the presence of electrical network frequency in a video using the characteristics of groups of pixels is presented in the paper by Vatansever et al. "Detecting the Presence of ENF Signal in Digital Videos: A Superpixel-Based Approach", presented in IEEE Signal Processing Letters, October 2017. In said work, the electrical network frequency is obtained from each of the subdivisions of the frames, and then it is checked if the sequences obtained are similar to determine if there are traces of electrical network frequency in the video under analysis without considering a ground-truth sequence. In this article the inhomogeneous distribution of the variations originated by the electrical network frequency is discussed for the first time, but as the objective of detecting the electrical network frequency in the video sequence does not require to identify the individual pixels that are not conveying information, the procedure employed is less sophisticated than what is needed for the problem of electrical network frequency extraction.

Panezenkos et al. disclose in US2015052073A1 patent application a method and system with the specific purpose of determining when and where a recording was made. Said disclosure describes a basic method that filters the recording for extracting the electrical network frequency coupled into said recording without neither further video processing nor any type of feedback step. A similar application is described in US2014147097A1 patent application for the extraction of the electrical network frequency from digital recordings, making emphasis on the aliasing and the additional processing to mitigate its effects, therefore centering the effort on the operations at sample-level. Nonetheless, said processing may be improved, regardless of the effects of aliasing, to cope with the movement and the characteristics of the scene.

On the other hand, US2015356992A1 patent application as well as the previously mentioned US2018205922A1 publication describe similar and basic methods for the extraction of the electrical network frequency from digital recordings with several objectives as estimating the time of recording or the synchronization of audio or video recordings. In said publications, it is also described a method for the extraction of the electrical network frequency from digital videos using the rolling shutter mechanism, that allows to increase the sampling frequency by reading and obtaining a sample in a row-by-row or column-by-column basis, which mitigates the problems originated by the aliasing. Said method is further described in some articles, as "Exploiting rolling shutter for ENF signal extraction from video", written by Hui Su et al, published in IEEE International Conference on Image Processing (ICIP) in 2014, and its performance is analyzed in several publications, as "Analysis of Rolling Shutter Effect on ENF-Based Video Forensics", by S. Vatansever et al, published in IEEE Transactions on Information Forensics and Security, vol. 14, no. 9, September 2019, in which its limitations due to the idle time between frames are thoroughly analyzed. Besides, said method is more susceptible to the effects of the movement, as there are fewer pixels to average. This less information available makes a further video processing step ineffective in the case of non-static videos.

Additionally, in case a filter is used to isolate the electrical network frequency and improve the estimation, or an instantaneous frequency estimation method based on the FM demodulator is employed, the center frequency of the signal is required. However, this value is a function of the frame rate, which may not be known or, due to a plurality of phenomena, may deviate from its nominal value. None of the previous methods includes a system for estimating the frame rate, which implies that the extraction method must be repeated with all the possible values that the frame rate may take until the estimation is successful.

As it has been explained, the existing methods for the extraction of the electrical network frequency from digital videos still present numerous deficiencies that make them unsuitable for their application in real-life scenarios. In this scenario, a method for the extraction of the electrical network frequency from digital videos must fulfill several requirements:

- High robustness to the effects induced by the movement. When recording a digital video, the scene captured depends not only on the variations in the luminance induced by the electrical network frequency but also on the effects of the movement, which introduces unexpected discontinuities in the luminance of a given group of pixels. These variations may be modeled as the addition of white noise to the samples of the time-domain luminance obtained from each frame, reducing the Signal to Noise ratio and hindering the extraction process. Additionally, other effects, as changes in the luminance of the frame due to variations in the main source of light, may have a negative impact on the estimation process too. As discussed, none of the existing methods for the extraction of the electrical network frequency from digital videos is able to fulfill this requirement.

- High robustness to the characteristics of the scene. Even in static videos, the scenes recorded by digital cameras may be diverse, with some regions in which the variations of the electrical network frequency are captured clearly and others where there is no information about said variations. Identifying said regions and operating consequently has a positive impact on the Signal to Noise ratio, as those pixels that do not convey information about the electrical network frequency only provide noise.

- Independence of the parameters of the camera. In most scenarios, the camera used to record the digital video under analysis is unknown. In particular, the frame rate is a critical parameter for the extraction process, as aliasing changes the position of the carrier in terms of said parameter. In addition, even when the frame rate is known nominally beforehand, its real value varies due to a plurality of phenomena, making it more difficult to extract the electrical network frequency. Even when an exhaustive trial and error with all the possible frame rates is a possibility, it is very time-consuming and unsustainable for real-life applications such as time of recording estimation, where the electrical network frequency obtained from the video must be compared with several ground-truths obtained from reliable databases. This problem has not been addressed thoroughly in the existing art yet.

**Summary of the invention**

The present invention describes a method and system for estimating the electrical network frequency from videos recorded with digital cameras, as defined by the claims. The core of the present invention is a system that compensates, in the process of extraction of the electrical network frequency from a digital video, for the detrimental effects of the movement and the characteristics of the scene; and a method that allows to estimate the frequency of the oscillator of the digital camera used to record the video, which may be unknown or, being known nominally, may drift from one video to another due to a plurality of phenomena. The invention is applicable to numerous forensic scenarios as long as they require the use of the electrical network frequency obtained from digital videos, but it is particularly suited for temporal localization of videos recorded in moving scenes with a camera whose characteristic parameters are unknown.

The present invention overcomes the problems identified in the review of the related art for the extraction of electrical network frequency signals from non-static digital videos recorded with cameras whose frame rate is unknown, while preserving the quality of the estimated electrical network frequency in case the video is static and/or the frame rate is known beforehand. This provides a high degree of robustness to the characteristics of the scene and the variations induced by moving elements on the instantaneous luminance, and makes the process more independent of the characteristic parameters of the camera, thereby facilitating the automatization of the process.

The present invention comprises a method for the compensation of motion and/or scene-derived impairments and a method for frame rate estimation. The method for the compensation of movement and/or scene-derived impairments encompasses two main modules: a video processing module and an instantaneous frequency estimation module. The video processing module is composed of a plurality of methods operating pixel-wise to cope with the movement and produce one representative sample per frame. The instantaneous frequency estimation module obtains the electrical network frequency by processing in a sample-wise manner the sequence obtained from the video processing module.

In accordance with one aspect of the invention, a method for estimating the electrical network frequency from a digital video is provided, comprising an electrical network frequency extraction system (102) wherein the signal is extracted from the digital video (100); the estimation encompassing the following steps:

- detecting which pixels in each frame of the video are representative of the ENF variations (106);

- processing and combining the representative pixels to compute one representative sample per frame and produce a sequence of representative samples (108);

- processing said sequence of representative samples to obtain an instantaneous frequency sequence (120), wherein said processing comprises a method for spectral estimation using a feedback step (116), which takes into account the statistical recursive properties of the electrical network frequency and the particular characteristics of the sequence delivered by the video processing module (104).

By example, the instantaneous frequency estimation method (114) is preceded by a preconditioning module (110) wherein the sequence of samples obtained from the video processing module (104) is conditioned to provide a sequence in a format suitable for the spectral estimation process **(116)** or the frame rate estimation process **(112)**. The preconditioning module may include at least one of the following operations, in any order and with any number of occurrences:

- equalization of the sequence;

- temporal linear or non-linear processing to detect and mitigate those variations in the sequence that were originated by neither the electrical network frequency nor any of its harmonics;

- linear processing methods applied to the sequence of samples obtained from the video processing module **(104)** to isolate the main electrical network frequency or any of its harmonics that may be of interest, being optional to isolate a plurality of said main frequency and/or harmonics simultaneously.

In another example, the instantaneous frequency estimation module further comprises a post-processing block **(118)** applied to the instantaneous frequency sequence obtained on said feedback-based spectral estimation block **(116)**. The post-processing procedure includes at least one of the following operations:

- Suppression of the undesired spectral content in the instantaneous frequency sequence by means of a filter;

- Correction of the relevant characteristics of the electrical network frequency obtained from the previous filter or directly from any embodiment of the spectral estimator.

In a preferred embodiment, the detection **(106)** of the pixels $\mathbf{F}_n[p,q]$ that are more representative of the variations of the electrical network frequency within the nth frame $\mathbf{F}_n$ of the video, of size $P \times Q$, being $p$ and $q$ the indices of the rows and columns, respectively, is performed using at least one movement detection block; where said movement detection blocks provide a segmentation of every frame of the video discriminating, with respect to a given criterion, which pixels are affected by the movement and which belong to the background.

More precisely, the movement detection blocks employed in said preferred embodiment are a conventional background subtractor **(702)** in cascade with a discriminator **(704)**, the latter being a system that decides which pixels belong to the background taking into account the difference between its luminance, expressed as the Y component of the YUV space color $\mathbf{F}_n^Y[p,q]$, and the luminance of the pixel in the same position but in the previous frame $\mathbf{F}_{n-1}^Y[p,q]$. In case this value does not exceed a given threshold $\gamma$, which is configurable by the user, the pixel $\mathbf{F}_n^Y[p,q]$ is considered to be part of the background; this operation may be expressed as an indicator function following the next rule:

$$g_n^{\mathsf{b}}[p,q] = \begin{cases} 1 & |\mathbf{F}_n^Y[p,q] - \mathbf{F}_{n-1}^Y[p,q]| < \gamma \\ 0 & \text{other case} \end{cases}$$

The background subtractor **(702)** is preferably implemented using the Visual Background Extractor method, whose operation can be expressed by the following indicator function:

$$g_n^{\mathsf{a}}[p,q] = \begin{cases} 1 & \mathbf{F}_n[p,q] \text{ belongs to the background} \\ 0 & \text{other case} \end{cases}$$

Said preferred embodiment for movement detection at pixel level further comprises a block (706) identifying which pixels are not providing any information about the variations of the electrical network frequency, hence determining which of them are redundant, either because of the encoding process, that repeats blocks of pixels of previous frames thus introducing redundancy, or because in that part of the video the electrical network frequency is degraded or even not present.

In a preferred embodiment of this blockpd that identifies which pixels are redundant **(706),** a set of $L$ pixels taken from consecutive frames in the same position is analyzed; in case the variability of the given set, measured with any statistical metric is above a given threshold, the pixel of the current frame is kept. This is expressed by the indicator function:

$$g_n^{\mathsf{c}}[p,q] = \begin{cases} 1 & F(\mathbf{F}_n^Y[p,q],\ldots,\mathbf{F}_{n-L}^Y[p,q]) > \gamma_l \\ 0 & \text{other case} \end{cases}$$

with

$F(\cdot)$ the statistical function of said set of pixels that measures its variability,
$\gamma_l$ the threshold for said statistical function of the pixels.

A preferred embodiment of said step that identifies which pixels are not redundant **(706)** is defined by the next indicator function:

$$g_n^{\mathsf{c}}[p,q] = \begin{cases} 1 & |\mathbf{F}_n^Y[p,q] - \mathbf{F}_{n-1}^Y[p,q]| > \gamma_l \\ 0 & \text{other case} \end{cases}$$

with $\gamma_l$ a threshold that may be defined by the user, but preferably is set to one so that only those pixels which do not change are discarded.

In an alternative embodiment of the pixel redundancy detector **(706),** only those blocks that, according to the coding scheme, convey temporal and new information about the variations of the electrical network frequency are considered.

The preferred embodiment for the movement detection process at pixel-level comprises a sequence of steps; each of these steps estimates the set of pixels that belong to the background $\hat{\beta}$ (106), which is represented with the following indicator function,

$$G_n[p,q] = \begin{cases} 1 & \mathbf{F}_n^Y[p,q] \in \hat{\mathcal{B}} \\ 0 & \text{in other case} \end{cases}$$

In this particular embodiment, the value of this function is non-zero only if all of the three steps described above output the value one, thus $G_n[p,q] = g_n^{\mathsf{a}}[p,q]g_n^{\mathsf{b}}[p,q]g_n^{\mathsf{c}}[p,q]$.

The processing and combining at pixel-level **(108)** is preferably applied on the results of any of the embodiments of the movement detector at pixel level **(106),** merging the Y component of the YUV color space of said pixels $\mathbf{F}_n^Y[p,q]$ in one representative sample according to the following rule:

$$\Delta y(nT_{\mathsf{fps}}) = \frac{1}{\sum_p \sum_q G_n[p,q]G_{n-1}[p,q]} \sum_p \sum_q \left(\mathbf{F}_n^Y[p,q] - \mathbf{F}_{n-1}^Y[p,q]\right) G_n[p,q]G_{n-1}[p,q]$$

with

$n$ the index indicating the frame from which the current sample was obtained,

$T_{\text{fps}}$ the real sampling period of the digital camera,

$\Delta_y(nT_{\text{fps}})$ the difference of luminance **(708)** obtained as a result of this process,

As an alternative embodiment, the movement detector at pixel level **(106)** may be bypassed in case the scene recorded in the digital video is static and all the pixels convey relevant information about the variations of the electrical network frequency, with the combination at pixel-level **(108)** being an average to the luminance of all pixels of each frame to obtain the relevant samples to perform the estimation, following the next rule:

$$\Delta y(nT_{\text{fps}}) = \frac{1}{P \cdot Q} \sum_p \sum_q \mathbf{F}_n^Y[p, q]$$

with

$P$ the number of rows on each frame;
$Q$ the number of columns on each frame.

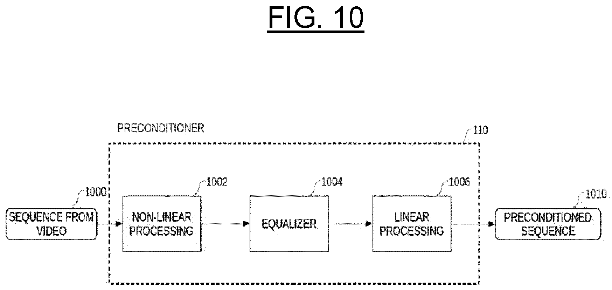

The preconditioning module (110), Fig. 10, comprises one of a non-linear processing block (1002), one of an equalizer (1004), and one of a linear filter (1006), in this order.

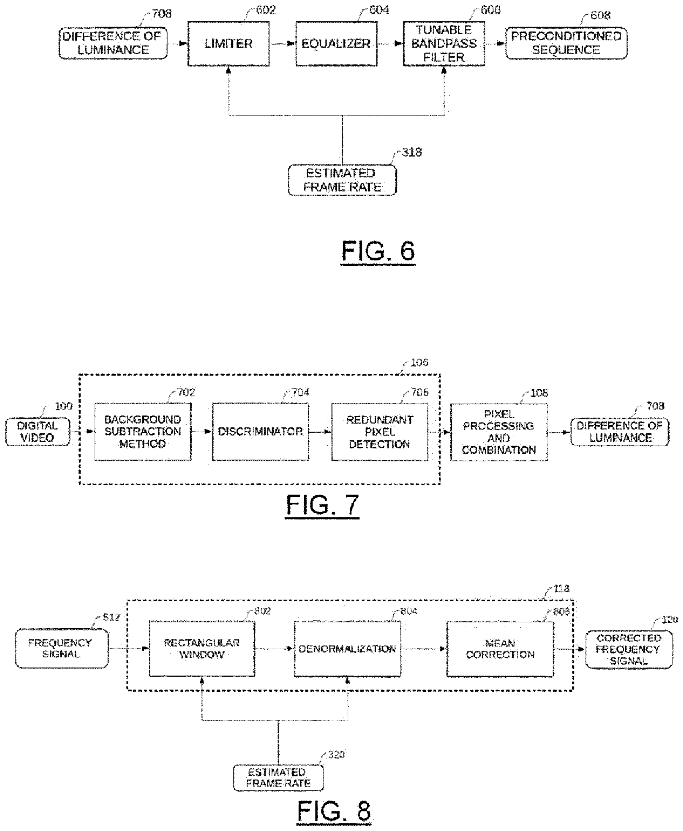

In the preferred embodiment of the preconditioning module , Fig. 6, the equalizer **(604)** computes the standard deviation of the sequence and then divides said sequence into short segments, scaling each of said segments individually until all the sequence has the same local standard deviation. This improves the performance of the spectral estimation block (116). Once the sequence has the same local standard deviation, the amplitude is normalized in order to prevent overflows in the feedback step of the spectral estimation process.

In the preferred embodiment, the non-linear processing is a limiter **(602)** which performs the following operation:

$$f(x) = \begin{cases} x & \text{if } |x| \le \psi \\ \psi & \text{if } x > \psi \\ -\psi & \text{if } x < -\psi \end{cases}$$

with $\psi$ the maximum and $-\psi$ the minimum admissible values, respectively.

The value of $\psi$ required by this limiter is preferably computed using the following rule:

$$\psi = \frac{2}{N} \left| \sum_{n=0}^{N-1} \Delta y_c(nT_{\text{fps}}) e^{-j\omega n} \right|$$

with

$\Delta y_c(nT_{\text{fps}})$ the sequence of samples **(708)** obtained from the video processing module **(104)**;
$N$ the number of samples in said sequence **(708)** available for carrying out the estimation;
$\omega$ the normalized frequency of interest in $\Delta \hat{y}_c(nT_{\text{fps}})$, which is computed using the following rule:

$$\omega = \frac{2\pi}{\tilde{f}_{\text{fps}}} \left( k f_e - l \tilde{f}_{\text{fps}} \right)$$

with

$\hat{f}_{\text{fps}}$ the estimation of the frame rate **(318)** obtained from the frame rate estimation block **(112)**;
$k$ an integer, function of the harmonic of interest. In case the main component is desired, then $k = 2$, due to the rectification process suffered by the voltage in the lamps;
$f_e$ the center frequency of the network, which is a known parameter whose value is 50 Hz in almost all parts of the world and 60 Hz in USA and Japan;

*l* the unique integer ensuring that $kf_e - l\hat{\tilde{f}}_{fps} \in (-\hat{\tilde{f}}_{fps}/2, \hat{\tilde{f}}_{fps}/2)$.

In an alternative embodiment, the value of $\psi$ required by the limiter can be computed using the energy of the sequence obtained from the equalizer:

$$\psi = p\frac{1}{N}\sqrt{\sum_{n=0}^{N-1}\left|\Delta\tilde{y}_c(nT_{fps})\right|^2}$$

with P a user-configurable parameter that allows to leave a security margin for unforeseen events.

In the preferred embodiment, the linear processing **(1006)** is implemented using a tunable bandpass filter **(606)**, whose passband is adjustable in terms of the frame rate and the component of interest, setting the center frequency as:

$$f_{cf} = kf_e - l\tilde{f}_{fps}$$

with

$f_{cf}$ the center frequency of the filter;

*k* an integer, function of the harmonic of interest. In case the main component is desired, then *k* = 2, due to the rectification process suffered by the voltage in the lamps;

$f_e$ the center frequency of the network, which is a known parameter whose value is 50 Hz in almost all parts of the world and 60 Hz in USA and Japan;

*l* the unique integer ensuring that $kf_e - l\hat{\tilde{f}}_{fps} \in (-\hat{\tilde{f}}_{fps}/2, \hat{\tilde{f}}_{fps}/2)$.

In an alternative embodiment, the linear processing block **(1006)** is implemented using a bandpass filter whose center value is fixed, but has a wide passband in order not to suppress relevant components.

In an alternative embodiment, the preconditioning module **(110)** may be bypassed in case the sequence obtained directly from the frames or from the video processing module **(104)** has no remaining discontinuities originated by the movement or the characteristics of the scene, its amplitude is the same locally, and the component or components of interest are already isolated .

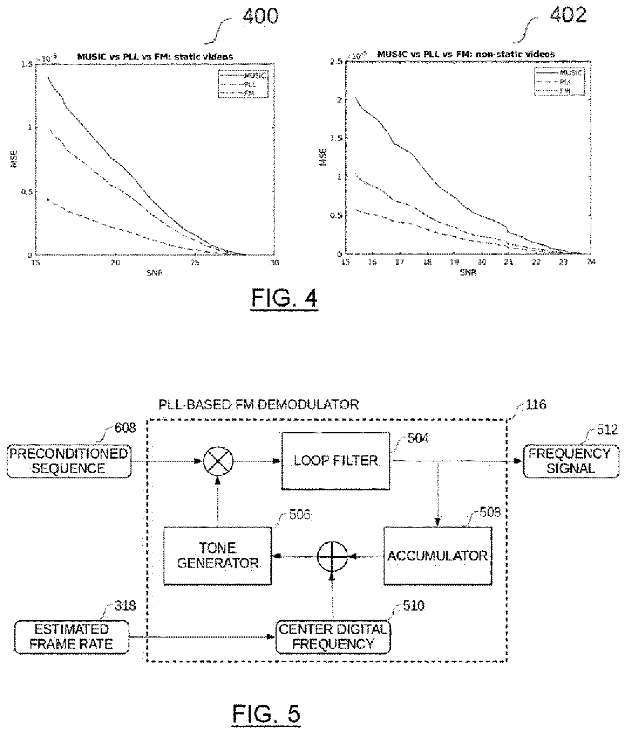

The spectral estimation block **(116)** preferably comprises a phase-locked loop as a feedback element, which takes as input the signal coming from any embodiment of the preconditioner and uses the estimated frame rate **(318)** to produce the instantaneous frequency sequence. This procedure allows for lightweight implementations in devices with limited resources while improving the estimation in digital videos as it takes into account the recursive nature of the ENF, filtering out the sudden variations induced by the movement or the characteristics of the scene **(402)**, Fig 4B, and improving performance for lower Signal to Noise Ratios in static scenarios **(400)**, Fig. 4A.

Alternative embodiments of the spectral estimation block **(116)** are contemplated, this embodiments comprising any combination of feedback-based spectral estimation modules with other methods for spectral estimation, either if said methods encompass feedback steps or not. As an example, and not a limitation, this deployment may be used with the purpose of taking advantage of diversity, using different harmonics of the time-domain sequence.

A preferred embodiment for the phase-locked loop is implemented as a system that multiplies the preconditioned sequences **(608)** by a tone **(506)**, preferably a discrete-time sinewave, with the same digital frequency **(510)**, which is the same value $\omega$ employed in the preferred embodiment of the limitator, thereby being necessary to use the estimated frame rate (318) in order to compute its value. Then, a first order loop filter **(504)** is used to eliminate the undesired components, whose Z-transfer function is:

$$L(z) = \frac{k_1 + k_2 z^{-1}}{1 - z^{-1}}$$

with

$k_1$ and $k_2$ parameters that can be configured by the user. The output of this filter is the frequency sequence **(512)** which feeds an accumulator **(508)** that computes the phase of the sine for the next iteration.

In a preferred embodiment, the post-processing block **(118)** is composed of a rectangular window filter **(802)** that suppresses the undesired spectral content of the frequency sequence, a denormalization block **(804)** that uses the estimated frame rate **(318)** to obtain the analog frequency from the digital normalized frequency at the output of any embodiment of the spectral estimation block **(116),** this post-processing block further comprising a multiplier that scales the frequency if necessary, and a block that corrects the mean value **(806)** so that the sequence has the same properties as the main component, regardless of the harmonic used to perform the estimation.

In accordance with yet another aspect of the present invention, a frame rate estimation module **(112)** is disclosed.; It receives the sequence of samples from any embodiment of the video processing module **(104)** and computes an estimated value of the sampling frequency of the digital camera used to record the given video **(100).**

The frame rate estimation module **(112)** preferably comprises two stages:

- The first stage **(302)** computes a value precise enough for obtaining the electrical network frequency of the video in an instantaneous frequency estimation block **(306)** regardless of the different effects of filtering in the processing chain.
- The second stage **(316)** estimates the value with much more precision comparing the statistical characteristics of the electrical network frequency obtained in the first stage and those of the sequence used as ground-truth obtained directly from the mains or a reliable database.

In a preferred embodiment, the first stage of the frame rate estimator **(302)** receives the sequence of samples from a non-linear processing block, using preferably the energy-based alternative embodiment of the limiter **(300)** described above, which is independent of the frame rate. Then, an estimate of the frame rate **(320)** is obtained from the relation between the expected value of the electrical network frequency of the video and the center frequency of the network. It is known that:

$$f_{\text{c}} = k f_{\text{e}} - l f_{\text{fps}}$$

with

$f_{\text{c}}$ the center frequency of the sequence obtained from the digital video **(100),** after it has suffered aliasing,
$f_{\text{fps}}$ the real frame rate,
$k$ an integer function of the harmonic of interest. In case the main component is desired, then $k = 2$, due to the rectification process suffered by the voltage in the lamps,
$f_{\text{e}}$ the center frequency of the network, which is a known parameter,
$l$ the unique integer ensuring that $k f_{\text{e}} - l f_{\text{fps}} \in (-f_{\text{fps}}/2, f_{\text{fps}}/2)$,

From the previous relation the following rule is applied to obtain an estimate of the frame rate (320):

$$\hat{f}_{\text{fps}} = \frac{2\pi k f_{\text{e}}}{\hat{\omega}_{\text{c}} + 2\pi l}$$

with $\hat{\omega}_c$ an estimate of the mean value of the normalized frequency obtained from the video, which may be computed with subspace-based spectral estimation methods as MUSIC or ESPRIT.

In the preferred embodiment, the second stage of the frame rate estimator according to the present invention further comprises a second stage with the following steps:

In this second stage, the sequence of samples of difference of luminance **(708)** is delivered to a preconditioner and down-converter **(304)** comprising: a preconditioner (110) with the same preferred embodiment disclosed above (Fig. 6), and a down-converter to baseband, using the frame rate **(320)** estimated in the first stage of the sampling frequency estimation block **(302);** in case the downconversion is already embedded in the instantaneous frequency estimation, as when the preferred embodiment for the instantaneous frequency estimation module is employed, the downconversion in step **(304)** can be skipped.

The output of the previous preconditioner and down-converter **(304)** is further processed to obtain the electrical network frequency in an instantaneous frequency estimation module **(306),** again with the same preferred embodiment as disclosed above above (Fig. 5), using the frame rate **(320)** obtained in the first stage **(302).**

Said electrical network frequency sequence obtained from the instantaneous frequency estimation module **(306)** is compared in the NCC-based time of recording estimation module **(314)** with a ground-truth obtained directly from the mains or a public database **(312),** after resampling to a common sampling rate both sequences, using the normalized correlation coefficient as cost function, so that the time of recording is found as the maximum of the normalized correlation coefficient which is computed following the rule:

$$J(\tau) = \frac{1}{N-1} \sum_{n=0}^{N-1} \frac{\tilde{f}_{\mathrm{c}}\left(n\frac{T_{\mathrm{fps}}}{\hat{T}_{\mathrm{fps}}}T_{\mathrm{cr}}\right) - \hat{\mu}_{\mathrm{c}}}{\hat{\sigma}_{\mathrm{c}}} \cdot \frac{f_{\mathrm{e}}(nT_{\mathrm{cr}} - \tau) - \hat{\mu}_{\mathrm{e}}(\tau)}{\hat{\sigma}_{\mathrm{e}}(\tau)}$$

with

$T_{cr}$ the common sampling period,
$\hat{T}_{\mathrm{fps}}$ the sampling period obtained in the first stage of the frame rate estimation **(302)**,

$$\tilde{f}_{\mathrm{c}}\left(n\frac{T_{\mathrm{fps}}}{\hat{T}_{\mathrm{fps}}}T_{\mathrm{cr}}\right)$$

the instantaneous frequency sequence obtained from the video in the instantaneous frequency estimation module **(306)** after the process of resampling to a common sampling frequency using the value obtained in the first stage of the frame rate estimation **(302)**,
$f_{\mathrm{e}}(nT_{\mathrm{cr}} - \tau)$ a time-shifted version, by $\tau$ samples, of the ground-trutlh obtained from trusted or untrusted ground-truth reference database **(312)**,
$\hat{\mu}_{\mathrm{c}}$ and $\hat{\mu}_{\mathrm{e}}(\tau)$ the estimation of the mean value of the frequency obtained from the digital video (100) and the ground-truth reference database **(312)**, respectively, computed with the following rules:

$$\hat{\mu}_{\mathrm{c}} = \frac{1}{N} \sum_{n=0}^{N-1} \tilde{f}_{\mathrm{c}}\left(n\frac{T_{\mathrm{fps}}}{\tilde{T}_{\mathrm{fps}}}T_{\mathrm{cr}}\right) \qquad \hat{\mu}_{\mathrm{e}}(\tau) = \frac{1}{N} \sum_{n=0}^{N-1} f_{\mathrm{e}}(nT_{\mathrm{cr}} - \tau)$$

$\hat{\sigma}_{\mathrm{c}}$ and $\hat{\sigma}_{\mathrm{e}}(\tau)$ the standard deviations of the frequency sequences obtained from the digital video (100) and the ground-truth reference database **(312)**, respectively, computed with the following rules:

$$\hat{\sigma}_{\mathrm{c}} = \sqrt{\frac{1}{N-1} \sum_{n=0}^{N-1} \left(\tilde{f}_{\mathrm{c}}\left(n\frac{T_{\mathrm{fps}}}{\hat{T}_{\mathrm{fps}}}T_{\mathrm{cr}}\right) - \hat{\mu}_{\mathrm{c}}\right)^2} \quad \hat{\sigma}_{\mathrm{e}}(\tau) = \sqrt{\frac{1}{N-1} \sum_{n=0}^{N-1} \left(f_{\mathrm{e}}(nT_{\mathrm{cr}} - \tau) - \hat{\mu}_{\mathrm{e}}(\tau)\right)^2}$$

Ideally, once the point in which both sequences are more similar is estimated, both represent the same variations over time and their averaged value should be the same,

Finally, the difference between the average value of both frequency sequences is computed. This difference allows to quantify the error in the estimation of the sampling period. This is possible because of the downconversion to baseband, where the mismatch between the estimated frequency and its real value causes a residual modulation in the time-domain sequence, originating a perceptible difference in the mean value of both signals at the output of the post-processing block **(310).** Then, the sampling period of the digital camera can be obtained with the following rule **(316):**

$$\tilde{T}_{\mathrm{fps}} = \frac{\frac{1}{N} \sum_{n=0}^{N-1} \left(\tilde{f}_{\mathrm{c}}(n\frac{T_{\mathrm{fps}}}{\hat{T}_{\mathrm{fps}}}T_{\mathrm{cr}}) - 2f_{\mathrm{e}}(nT_{\mathrm{cr}} - \hat{\tau})\right) + 2f_{\mathrm{e}}}{2f_{\mathrm{e}}\hat{f}_{\mathrm{fps}}}$$

with
$\hat{\tau}$ the estimated time of recording using the normalized cross correlation as a cost function **(314),**
In an alternative embodiment, the frame rate estimation module **(306)** may be bypassed in case the frame rate is known beforehand.
In accordance with yet another aspect of the present invention, a Generalized Likelihood Ratio Test detector for the electrical network frequency is provided.

In a particular embodiment of the Generalized Likelihood Ratio Test detector, the electrical network frequency is obtained from a video using the extraction method described above that requires the estimated frame rate **(318).** Then, the instantaneous frequency sequence is compared with a ground-truth sequence to determine the moment in which both sequences are more similar according to a given cost function, preferably, the mean squared error of the sequences. Finally, if the optimal value of this cost function is under a given threshold, configurable by the user for a given probability of false alarm, it is considered that there exists an electrical network frequency signal in the video under analysis.

The preferred application of the present invention is a system for estimating the time of recording of non-static digital videos recorded with a camera whose frame rate is unknown, thereby providing an alternative that can be employed in practical situations. Said system further comprises a comparison module, in which a cost function measuring the similarity of the instantaneous frequency sequence obtained from the digital video **(100)** and the ground-truth sequence is evaluated and the optimal value is selected as the time of recording. The preferred cost function for this application is the mean squared error between the sequence obtained from the digital video **(100)** and the ground-truth, once both sequences are resampled to a common sampling frequency and the real frame rate has been accurately estimated; in case an accurate estimation of the frame rate is not available, the mean squared error is not reliable and the normalized correlation coefficient is preferred, as exposed in the frame rate estimation module **(306)** disclosed above. The rule for the mean squared error is as follows:

$$ J(\tau) = \frac{1}{N} \sum_{n=0}^{N-1} \left| f_{\mathrm{c}}\left(n \frac{T_{\mathrm{fps}}}{\tilde{T}_{\mathrm{fps}}} T_{\mathrm{cr}}\right) - f_{\mathrm{e}}(n T_{\mathrm{cr}} - \tau) \right|^2 $$

with $f_{\mathrm{c}}\left(n \dfrac{T_{\mathrm{fps}}}{\tilde{T}_{\mathrm{fps}}} T_{\mathrm{cr}}\right)$ the corrected frequency sequence **(120)** provided by the invention **(120);** generally $\dfrac{T_{\mathrm{fps}}}{\tilde{T}_{\mathrm{fps}}} \approx 1$ .

One alternative application of the present invention comprises tampering detection of a given video using the electrical network frequency. The tampering detection comprises, as an example and without any limitation, the detection of the insertion or suppression of frames.

Other alternative application of the present invention comprises the verification of the integrity of a given video using the electrical network frequency. The verification of the integrity comprises, as an example and without any limitation, the detection of sets of modified pixels in one or several frames.

Another alternative application of this invention is the localization of the geographical area in which the video was recorded.

Other alternative applications of this invention comprise all the potential applications of the electrical network frequency in digital videos, applied in scenarios where the video under analysis contains a series of non-static scenes and the parameters of the camera used to record it are unknown.

## Brief description of the drawings

A series of drawings which aid in better understanding the invention and which are expressly related to an embodiment of said invention, presented as a non-limiting example thereof, are briefly described below.

Fig. 1 depicts a schematic block diagram of an embodiment of electrical network frequency extraction system and method according to the present invention.

Fig. 2 illustrates the detrimental effects of the drift experienced by the frame rate of the digital camera in the electrical network frequency obtained from the video.

Fig. 3 shows a schematic block diagram of a frame rate estimation method as described in the present invention.

Fig. 4 is a representation of the mean square error as a function of the Signal to Noise Ratio both when using the illustrated embodiment of the present invention and when it is not used.

Fig. 5 is a block diagram representing the preferred embodiment for the spectral estimation module.

Fig. 6. shows a specific block diagram for the preferred embodiment of the preconditioning module.

Fig. 7 illustrates the preferred embodiment for the video processing module.

Fig. 8 is a representation of the preferred embodiment for the post-processing block.

Fig. 9 represents the probability of a correct estimation of the time of recording of a digital video using the present invention and compared to an alternative from the state of the art.
Fig. 10 illustrates a general block diagram of the preconditioning module.

**Description of a Preferred Embodiment of the Invention**

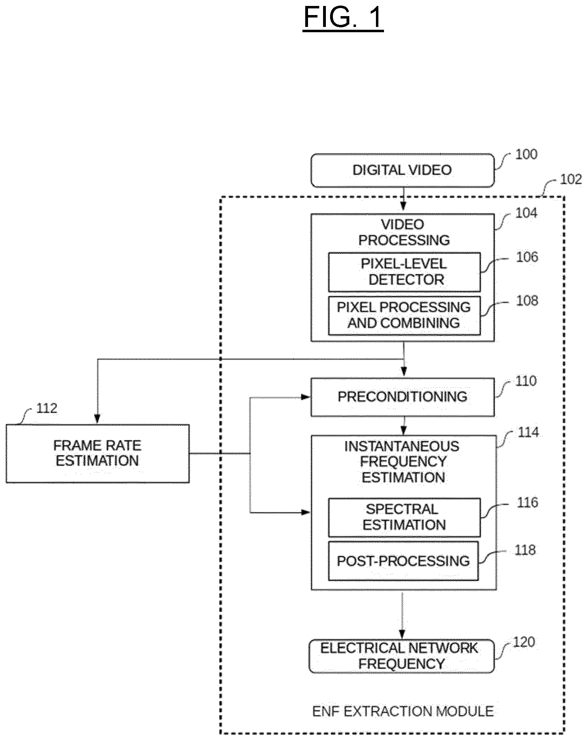

Fig. 1 depicts a block diagram of a system and method for electrical network frequency extraction from digital videos , according to the present invention. The digital videos **(100)** can be recorded with cameras whose frame rate may be unknown **(102)**. The digital video **(100)** under analysis can originate from any source: it can be a recording or a fragment extracted from a larger recording retrieved from a digital camera in real-time, or offline from any storage system, including the Internet, as it is not necessary to know the characteristics of the camera. Despite being intended for non-static videos, the present invention is able to obtain the electrical network frequency in case the content of the digital video is static too, therefore generalizing the alternatives of the state of the art.

In the particular embodiments of Fig. 1, the electric network extraction module **(102)** comprises a video processing module **(104)**, a preconditioning module **(110)** and an instantaneous frequency estimation module **(114)**. The frames of the digital video **(100)** are processed by the video processing module **(104)** in order to provide a sequence of samples that represents the temporal variations of the luminance of each frame. The operations performed by the video processing module **(104)** include the following: detection of the pixels that are not representative of the electrical network frequency and processing and combining said pixels to obtain one sample per frame. For this purpose, the video processing module **(104)** comprises a pixel-level detector block **(106)** and a pixel processing and combination block **(108)**. The sequence of luminance differences **(708)** at the output of the pixel processing and combining block **(108)** (Fig. 7) has a format that can be fed to the frame rate estimator **(112)**, which further processes and analyzes the data to compute an estimation of the frame rate of the digital camera used to record the digital video **(100)**. Said estimated frame rate is used by the preconditioning module **(110)** to reduce the remaining undesired variations in the sequence at the output of the video processing module **(104)**. The sequence at the output of the preconditioning module **(110)** is delivered to the instantaneous frequency estimation module **(114)**. The instantaneous frequency estimation module **(114)** comprises a feedback-based spectral estimation block **(116)** and a post-processing block **(118)** to smooth and correct the mean and amplitude of the result of the spectral estimation. The output of the post-processing block **(118)** is a sequence that contains the estimated instantaneous electrical network frequency **(120)** that was embedded in the digital video under analysis **(100)**..

In Fig. 7 the video processing module **(104)** of the method and system of the invention is illustrated in greater detail. This procedure addresses the relevant problems of the state of the art with non-static videos, comprising a pixel-level detection module **(106)** that receives frames $\mathbf{F}_n$ from the digital video **(100)** containing pixels $\mathbf{F}_n[p, q]$, with $P$ and $q$ the indices of the rows and columns, respectively. In this preferred embodiment, the pixel-level detection module **(106)** discards all the pixels $\mathbf{F}_n[p, q]$ within the $n$th frame that do not provide any information about the temporal variations of the electrical network frequency. The preferred pixel-level detection module **(106)** comprises a motion compensation block and a redundant pixel detection block **(706)**. :
The motion compensation block identifies which pixels were affected by the movement in each frame. This block comprises two parts in the preferred embodiment.. Firstly, a conventional background subtractor **(702)**, preferably implemented using a Visual Background Extractor whose operation is described by the following indicator function:

$$g_n^{\mathsf{a}}[p, q] = \begin{cases} 1 & \mathbf{F}_n[p, q] \text{ belongs to the background} \\ 0 & \text{other case} \end{cases}$$

Secondly, a discriminator **(704)** which decides that one pixel is affected by the movement whenever the difference with the pixel in the same position but in the previous frame exceeds a user-configurable threshold $\gamma$.

$$g_n^{\mathsf{b}}[p, q] = \begin{cases} 1 & |\mathbf{F}_n^Y[p, q] - \mathbf{F}_{n-1}^Y[p, q]| < \gamma \\ 0 & \text{other case} \end{cases}$$

with $\mathbf{F}_n^Y[p, q]$ the Y component of the YUV color space of pixel $\mathbf{F}_n[p, q]$.
The redundant pixel detection block **(706)** identifies which pixels are neither affected by the movement nor provide information about the temporal variations of the electrical network frequency. This procedure is also beneficial when applied to static videos, as it provides a sequence more suitable for the subsequent estimation blocks. In the preferred embodiment, the following rule is applied:

$$g_n^{\mathsf{c}}[p,q] = \begin{cases} 1 & |\mathbf{F}_n^Y[p,q] - \mathbf{F}_{n-1}^Y[p,q]| > \gamma_l \\ 0 & \text{other case} \end{cases}$$

with $\gamma_l$ a threshold that may be defined by the user, but preferably is set to one so that only those pixels which do not change are discarded.

Following the previous descriptions, in the preferred embodiment a pixel is accepted as representative of the variations of the electrical network frequency only if the three methods classify them as valid. This is equivalent to the following rule::

$$G_n[p,q] \doteq \begin{cases} 1 & \text{if the pixel is valid} \\ 0 & \text{in other case} \end{cases}$$

with $G_n[p,q] = g_n^{\mathsf{a}}[p,q]g_n^{\mathsf{b}}[p,q]g_n^{\mathsf{c}}[p,q]$

Despite some prior art works have put forward the idea of using background subtraction methods, they considered the background subtraction as a standalone element without introducing neither the discriminator **(704)** nor the redundant pixel detection block **(706),** and with no additional processing: they discard those pixels that are not part of the background and average the remaining values in order to obtain the samples. Nonetheless, since each pixel has a contribution to the average value of the luminance, discarding some of them will introduce variations in said sequence of averaged luminance. Aiming to solve this problem, in the present invention a new processing and combining block **(108)** is introduced. This block implements a differentiator filter to remove the local mean value in each pixel, so that discarding some of the pixels no longer represents a problem.

The processing and combining at pixel-level **(108)** is preferably applied on the results of any of the embodiments of the movement detector at pixel level **(106)** pixel detector, merging the Y components of the valid pixels from two consecutive frames in one representative sample according to the following rule for obtaining the difference of luminances **(708):**

$$\Delta y(nT_{\mathsf{fps}}) \doteq \frac{1}{\sum_p \sum_q G_n[p,q]G_{n-1}[p,q]} \sum_p \sum_q \left(\mathbf{F}_n^Y[p,q] - \mathbf{F}_{n-1}^Y[p,q]\right) G_n[p,q] G_{n-1}[p,q]$$

with

    *n* the index indicating the frame from which the current sample was obtained;
    $T_{\mathsf{fps}}$ the real sampling period of the digital camera;
    $\Delta y(nT_{\mathsf{fps}})$ the difference of luminances **(708)** obtained as a result of this process.

In the next step of the preferred embodiment, the sequence of difference of luminances **(708)** is delivered to a preconditioning module **(110)** that processes the samples of difference of luminances **(708)** in order to obtain a sequence more suitable for the instantaneous frequency estimation module **(114).** A high level embodiment of this step is shown in Fig. 10 In general, the preconditioning module **(110)** takes as input the sequence from the video **(1000),** and comprises a non-linear processing block **(1002),** an equalization step **(1004)** and a linear processing block **(1006),** which outputs the preconditioned sequence **(1010).** The configuration of the preconditioning step in the preferred embodiment is represented in Fig. 6. Firstly, the sequence of difference of luminances **(708),** that can be modeled as a carrier embedded in white Gaussian noise, is delivered to a limiter **(602)** that clips those values outside a given range. In this preferred embodiment, the limits of said interval, which is symmetric and centered at zero, can be computed as:

$$\psi = \frac{2}{N} \left| \sum_{n=0}^{N-1} \Delta y_{\mathrm{c}}(nT_{\mathrm{fps}}) e^{-j\omega n} \right|$$

with

$\psi$ the upper bound of the interval,

$\Delta y_{\mathrm{c}}(nT_{\mathrm{fps}})$ the sequence of difference of luminances **(708)**,

$N$ the number of samples available for performing the estimation,

$\omega$ the normalized frequency of interest in $\Delta \tilde{y}_{\mathrm{c}}(nT_{\mathrm{fps}})$, which is computed using the following rule:

$$\omega = \frac{2\pi}{\tilde{f}_{\mathrm{fps}}} \left( k f_{\mathrm{e}} - l \tilde{f}_{\mathrm{fps}} \right)$$

with

$\tilde{f}_{\mathrm{fps}}$ the estimate of the frame rate **(318)** obtained from the frame rate estimation module **(112)**;

$k$ an integer which is a function of the harmonic of interest. In case the main component is desired, then $k = 2$, due to the rectification process suffered by the voltage in the lamps;

$f_{\mathrm{e}}$ the center frequency of the network, which is a known parameter whose value is 50 Hz in almost all parts of the world or 60 Hz in USA and Japan;

$l$ the unique integer ensuring that $k f_{\mathrm{e}} - l \tilde{f}_{\mathrm{fps}} \in (-\tilde{f}_{\mathrm{fps}}/2, \tilde{f}_{\mathrm{fps}}/2)$. Then, the result of the limiter **(602)** is:

$$\Delta \bar{y}_{\mathrm{c}}(nT_{\mathrm{fps}}) = \begin{cases} \Delta y_{\mathrm{c}}(nT_{\mathrm{fps}}) & \text{if } |\Delta y_{\mathrm{c}}(nT_{\mathrm{fps}})| < \psi \\ \psi & \text{if } \Delta y_{\mathrm{c}}(nT_{\mathrm{fps}}) > \psi \\ -\psi & \text{if } \Delta y_{\mathrm{c}}(nT_{\mathrm{fps}}) < -\psi \end{cases}$$

This sequence is delivered to an equalizer **(604),** a block that computes the standard deviation of the sequence and then divides said sequence into short segments, scaling each of said segments individually until all the sequence has the same local standard deviation. This improves the performance of the instantaneous frequency estimation module **(114).** Once the sequence has the same local standard deviation, the amplitude is normalized in order to prevent overflows in the feedback step of the spectral estimation process.

In the preferred embodiment, the output of the equalizer **(604)** is linearly processed using a tunable bandpass filter **(606)** whose passband is adjustable in terms of the frame rate and the component of interest, setting the center frequency as:

$$f_{\mathrm{cf}} = k f_{\mathrm{e}} - l \tilde{f}_{\mathrm{fps}}$$

with

$f_{\mathrm{cf}}$ the center frequency of the filter;

$k$ an integer which is a function of the harmonic of interest. In case the main component is desired, then $k = 2$, due to the rectification process suffered by the voltage in the lamps;

$f_{\mathrm{e}}$ the center frequency of the network, which is a known parameter whose value is 50 Hz in almost all parts of the world and 60 Hz in USA and Japan;

$l$ the unique integer ensuring that $k f_{\mathrm{e}} - l \tilde{f}_{\mathrm{fps}} \in (-\tilde{f}_{\mathrm{fps}}/2, \tilde{f}_{\mathrm{fps}}/2)$.

In Fig. 5 the block diagram of the preferred embodiment for the spectral estimation, in this case a phase-locked loop, is shown. As illustrated, the spectral estimation block **(116)** takes as input the preconditioned sequence **(608)** obtained from the previous module and the estimated frame rate **(318).** Said estimated frame **(318)** rate allows to compute

14

the center digital frequency (510) of the main component of the preconditioned sequence (608), following the next rule:

$$\omega = \frac{2\pi}{\tilde{f}_{\text{fps}}}\left(k f_{\text{e}} - l\tilde{f}_{\text{fps}}\right)$$

with the parameters already discussed above. This value is used by a tone generator (506) to synthesize a tone, preferably a discrete-time sinewave, $\sin(\omega n + \hat{\theta}((n\text{-}1)T_{\text{fps}}))$, with $\hat{\theta}((n\text{-}1)T_{\text{fps}})$ the phase estimated in the previous iteration, which multiplies the input signal. This multiplication produces two components, a baseband signal plus a component at double the frequency. The component at double the frequency is filtered out in the loop filter (504), a first order baseband filter with the next Z-transfer function

$$L(z) = \frac{k_1 + k_2 z^{-1}}{1 - z^{-1}}$$

with

$k_1$ and $k_2$ parameters that can be configured by the user. In case the difference between the phase of the signal at the input and the phase estimated in the previous iteration is small enough, the component in baseband can be approximated by its argument. Then, the output of this loop filter (504) is the frequency sequence (512) with zero mean due to the downconversion to baseband which, in addition to be the output of the system, feeds an accumulator (508) that computes the phase for the next iteration $\hat{\theta}(nT_{\text{fps}})$; the Z-transfer function of this accumulator (508) is:

$$L_\theta(z) = \frac{1}{1 - z^{-1}}$$

In order to obtain a signal that can be compared with other sequences obtained from trusted or untrusted sources, the frequency sequence (512) extracted using the phase-locked loop (512) is delivered to the post-processing block (118), as illustrated in Fig. 8. In the preferred embodiment, the post-processing block (118) comprises a discrete-time rectangular window (802) that smooths the extracted frequency sequence and filters out the high-frequency components. The impulse response of the rectangular window (802) is

$$h_W(nT_{\text{fps}}) = \begin{cases} \frac{1}{L_W} & \text{if } 0 \le n < L_W \\ 0 & \text{in other case} \end{cases}$$

$$L_W \doteq \frac{T_W}{T_{\text{fps}}}$$

with $\quad$ the length in samples of the rectangular window and $T_W$ the temporal length of the rectangular window in the continuous-time domain. The sequence filtered through the rectangular window (802) is delivered to a denormalization block (804). The denormalization block (804) uses the estimated frame rate (318) to obtain the analog frequency from the digital normalized frequency at the output the preferred embodiment of the spectral estimation block (116), this post-processing block further comprising a multiplier that scales the frequency if necessary, and a block that corrects the mean value (806) so that the sequence has the same properties as the main component, regardless of the harmonic used to perform the estimation. In the preferred embodiment the denormalization block (804) obtains the analog frequency using the estimated frame rate (318), employing the following rule:

$$f_{\text{c}}^{\text{ml}}(nT_{\text{fps}}) = \frac{\tilde{f}_{\text{fps}}}{2\pi}\omega_{\text{c}}^{\text{ml}}(nT_{\text{fps}})$$

with

$\omega_{\mathsf{c}}^{\mathsf{ml}}\left(nT_{\mathsf{fps}}\right)$ the zero-mean digital frequency at the output of the rectangular window **(802)**;

$f_{\mathsf{c}}^{\mathsf{ml}}\left(nT_{\mathsf{fps}}\right)$ the zero-mean analog frequency obtained from the denormalization;

$f_{\mathsf{fps}}$ the estimation of the frame rate **(318).**

The denormalization block **(804)** additionally scales its output by a scaling factor derived from the use of harmonics of the electrical network frequency. As an example, in case the main component is selected, the output sequence must be scaled by $\dfrac{1}{2}$ due to the rectification process. Finally, the mean value of the sequence is corrected in a block that corrects the mean value **(806)** employing the center value of the mains, which is 50 Hz or 60 Hz in most scenarios. The output of the post-processing block **(118)** is the Electrical Network Frequency (ENF) extracted from the digital video **(100).**

In Fig. 4 the mean square error between the corrected frequency signal (instantaneous electrical network frequency **(120)**) extracted from the video and the ground-truth obtained from the mains corresponding to the time of recording of the video is represented in terms of the signal to noise ratio, using 1) the phase-locked loop **(116)** proposed in the present invention after the post-processing block **(118),** 2) MUSIC, and 3) the FM demodulator as the most representative methods of the state of the art, being the sequences obtained with these two methods equally post-processed to compare them correctly with the ground-truth. Two situations are analyzed. Firstly, the performance of the three methods for static videos **(400)** (Fig. 4A) is represented, where an improvement using the phase-locked loop with respect to the MUSIC and the FM demodulator is shown for low signal to noise ratios. In case a non-static video is considered and the video processing **(104)** and preconditioning modules **(110)** are used **(402)** (Fig. 4B) with the three methods, the performance of the phase-locked loop further improves the results that are obtained with the MUSIC and the FM demodulator. This behavior reflects the robustness of the phase-locked loop against the remaining variations originated by the movement in the sequence after the video processing and preconditioning modules.

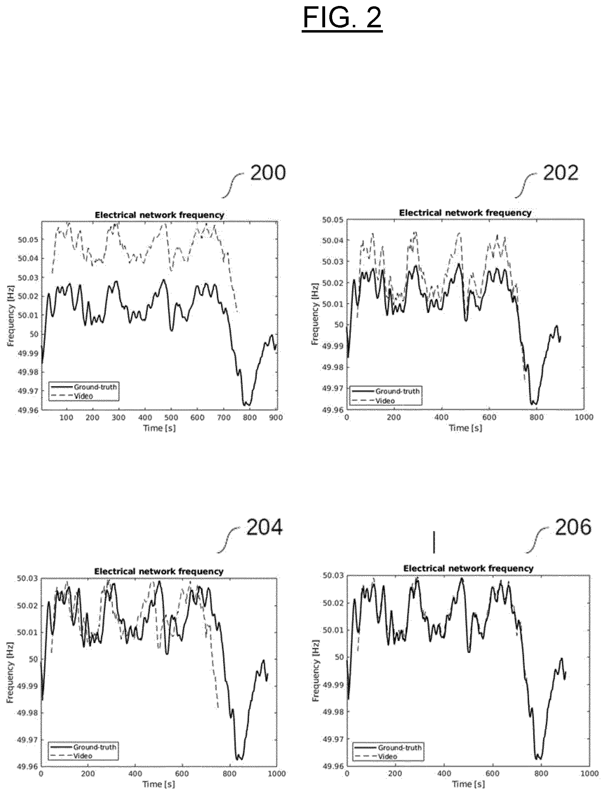

On the other hand, in the preferred embodiment the sequence of difference of luminance **(708)** is delivered to a frame rate estimation module **(112)**. In most applications, the parameters of the camera are unknown. However, even when the nominal frame rate is known, due to the constitutive materials of the camera, the frame rate may drift from one recording to the next. This originates some impairments in the sequence obtained from the video, as shown in Fig. 2, where the electrical network frequency is represented beside the ground-truthi extracted directly from a trusted database. The three most common errors are: 1) a mismatch in the mean value **(200)** (Fig. 2A) because of inaccuracies in the downconversion, as the discrete-time tone of the tone generator **(506)** or any equivalent in other possible embodiments could not be correctly synthesized; 2) different amplitudes **(202)** (Fig. 2B) because of the denormalization procedure in the denormalization block **(804),** and 3) a time drift **(204)** (Fig. 2C) produced by the resampling process carried out to compare the signal with a ground-truth, which is optional in this invention but is present in the preferred application; these effects can be compared with the ideal case **(206)** (Fig. 2D).

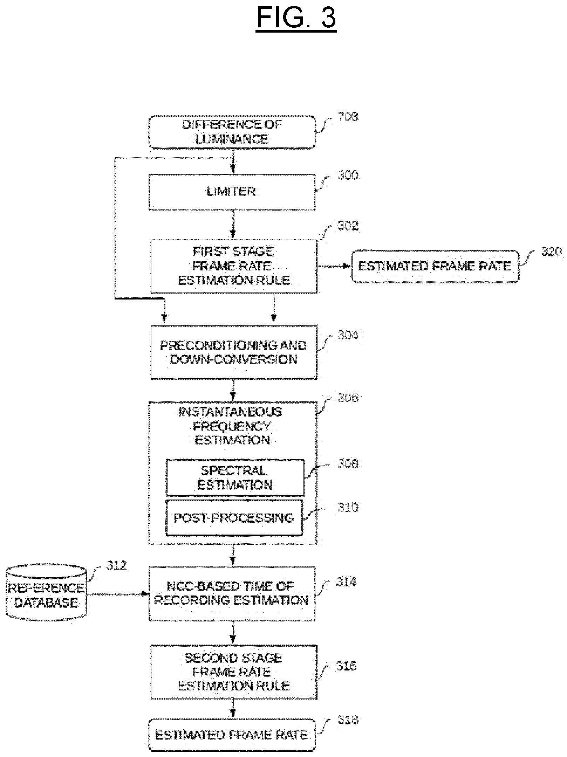

The procedure for computing an estimation of the frame rate is illustrated in Fig. 3. The frame rate estimation module **(212)** provides the estimated frame rate **(313)**. In the preferred embodiment, the sequence of difference of luminances **(708)** is delivered to a limiter **(300),** which is a function that suppresses those values outside a given range. In this case, the bounds of this interval centered at zero, $\psi,$ are computed as:

$$\psi = k\,\frac{1}{N}\sqrt{\sum_{n=0}^{N-1}\left|\Delta y_{\mathsf{c}}(nT_{\mathsf{fps}})\right|^{2}}$$

with

$k$ a user-configurable parameter that allows to leave a security margin for unforeseen events;
$N$ the number of samples of the sequence of difference of luminances available **(708).** Then, the resulting sequence of this process is:

$$\Delta \bar{y}_{\mathsf{c}}(nT_{\mathsf{fps}}) = \begin{cases} \Delta y_{\mathsf{c}}(nT_{\mathsf{fps}}) & \text{if } |\Delta y_{\mathsf{c}}(nT_{\mathsf{fps}})| < \psi \\ \psi & \text{if } \Delta y_{\mathsf{c}}(nT_{\mathsf{fps}}) > \psi \\ -\psi & \text{if } \Delta y_{\mathsf{c}}(nT_{\mathsf{fps}}) < -\psi \end{cases}$$

Said sequence can be modeled as a carrier embedded in white Gaussian noise. The center value of this carrier, in the digital domain, may be estimated using parametric methods for spectral analysis such as MUSIC or ESPRIT. Additionally, the position of the carrier is known nominally, as it is the center frequency of the mains shifted due to the aliasing effect, as expressed in the following rule

$$f_{\mathsf{c}} = k f_{\mathsf{e}} - l f_{\mathsf{fps}}$$

with

$f_{\mathsf{c}}$ the center frequency of the sequence obtained from the digital video (100), after it has suffered aliasing,
$f_{\mathsf{fps}}$ the real frame rate,
$k$ an integer function of the harmonic of interest. In case the main component is desired, then $k = 2$, due to the rectification process suffered by the voltage in the lamps,
$f_{\mathsf{e}}$ the center frequency of the network, which is a known parameter,
$l$ the unique integer ensuring that $k f_{\mathsf{e}} - l f_{\mathsf{fps}} \in (-f_{\mathsf{fps}}/2, f_{\mathsf{fps}}/2)$,

From the previous relation the following rule is obtained:

$$\hat{f}_{\mathsf{fps}} = \frac{2\pi k f_{\mathsf{e}}}{\hat{\omega}_{\mathsf{c}} + 2\pi l}$$

with $\hat{\omega}_{\mathsf{c}}$ an estimate of the mean value of the normalized frequency obtained from the digital video (100), which may be computed with subspace-based spectral estimation methods as MUSIC or ESPRIT. This rule is applied using the output of the limiter (302), and its result (320) is accurate enough to overcome the effects of any intermediate filter.

Nonetheless, the electrical network frequency varies slowly with time, and usually there is not enough information to estimate $\hat{\omega}_{\mathsf{c}}$ accurately. This would lead to an incorrect value for $\hat{f}_{\mathsf{fps}}$. In case a downconversion to baseband is performed using said value, as done in the tone generator (506), a residual modulation will appear. Then, if the electrical network frequency is extracted using a phase-locked loop as the preferred embodiment of the spectral estimation block (116) or any other embodiment comprising a downconversion to baseband, and its average value is compared with the value of the ground-truth corresponding to the time of recording of the video, a measure for the magnitude of the error in the estimation can be computed.

In the preferred embodiment the frame rate estimation further comprises a second stage with the following steps and modules. In this second stage, the sequence of difference of luminance (708) is delivered to a preconditioning module (304) with the same embodiment than the preconditioning module (110) discussed above using the frame rate estimated in the first stage (320) instead of the final value of the estimated frame rate (318), because said final value is not available yet. In case an instantaneous frequency estimation module (306) that does not include a downconversion is utilized, said preconditioning module (304) must further comprise a baseband conversion, employing a complex exponential or a multiplication by a sine or cosine followed by a filter to suppress the undesired components. The preconditioned sequence is delivered to an instantaneous frequency estimation module (306), which preferably encompasses the same phase-locked loop described before for the spectral estimation module (308) with the post-processing introduced above (310), using the estimation of the frame rate obtained in the first stage (320) instead of the precise final value of the estimated frame rate (318). Then, a frequency sequence with an error in the mean value is obtained.

Said electrical network frequency obtained from the instantaneous frequency estimation module (306) is compared with a ground-truth obtained directly from the mains or a trusted or non-trusted public reference database (312), after resampling to a common sampling rate $T_{\mathsf{cr}}$ said sequences, using the normalized correlation coefficient as cost function, so that the time of recording is found as the maximum of the normalized correlation coefficient in the NCC-based time of recording estimation module (314). This normalized correlation coefficient is given by the following rule

$$J(\tau) = \frac{1}{N-1} \sum_{n=0}^{N-1} \frac{\tilde{f}_c \left( n \frac{T_{fps}}{\hat{T}_{fps}} T_{cr} \right) - \hat{\mu}_c}{\hat{\sigma}_c} \cdot \frac{f_e(nT_{cr} - \tau) - \hat{\mu}_e(\tau)}{\hat{\sigma}_e(\tau)}$$

with

$T_{cr}$ the common sampling period,
$\hat{T}_{fps}$ the sampling period of the digital camera obtained in the first stage **(302)** of the frame rate estimation **(320)**,

$$\tilde{f}_c \left( n \frac{T_{fps}}{\hat{T}_{fps}} T_{cr} \right)$$

the frequency obtained from the video in the instantaneous frequency estimation module **(306)** after the process of resampling to a common sampling frequency using the value resulting from the first stage **(302)** of the frame rate estimation **(320)**,

$f_e(nT_{cr} - \tau)$ a time-shifted version, by $\tau$ samples, of the ground-truth obtained from a trusted or untrusted ground-truth reference database **(312)**,

$\hat{\mu}_c$ and $\hat{\mu}_e(\tau)$ the estimation of the mean value of the frequency obtained from the digital video (100) and the ground-truth, respectively, computed with the following rules:

$$\hat{\mu}_c = \frac{1}{N} \sum_{n=0}^{N-1} \tilde{f}_c \left( n \frac{T_{fps}}{\tilde{T}_{fps}} T_{cr} \right) \qquad \hat{\mu}_e(\tau) = \frac{1}{N} \sum_{n=0}^{N-1} f_e(nT_{cr} - \tau)$$

$\hat{\sigma}_c$ and $\hat{\sigma}_e(\tau)$ the standard deviations of the frequency sequences obtained from the digital video (100) and the reference database (312), respectively, computed with the following rules:

$$\hat{\sigma}_c = \sqrt{\frac{1}{N-1} \sum_{n=0}^{N-1} \left( \tilde{f}_c \left( n \frac{T_{fps}}{\tilde{T}_{fps}} T_{cr} \right) - \hat{\mu}_c \right)^2} \qquad \hat{\sigma}_e(\tau) = \sqrt{\frac{1}{N-1} \sum_{n=0}^{N-1} \left( f_e(nT_{cr} - \tau) - \hat{\mu}_e(\tau) \right)^2}$$

Ideally, once the instant when both sequences are more similar is estimated, both signals represent the same variations over time and their average values should be the same.

Finally, the difference between the average values of both frequency sequences is computed. This difference allows to quantify the error in the estimation of the sampling period. The sampling period of the digital camera can be obtained with the following rule **(316)**:

$$\tilde{T}_{fps} = \frac{\frac{1}{N} \sum_{n=0}^{N-1} \left( \tilde{f}_c (n \frac{T_{fps}}{\hat{T}_{fps}} T_{cr}) - 2f_e(nT_{cr} - \hat{\tau}) \right) + 2f_e}{2f_e \hat{f}_{fps}}$$

with
$\hat{\tau}$ the estimated time of recording using the normalized cross correlation as a cost function **(314)**.

The preferred application of the present invention is a system for estimating the time of recording of non-static digital videos recorded with a camera whose frame rate is unknown, thereby providing an alternative that can be employed in practical situations. Said system further comprises a comparison module, in which a cost function measuring the similarity of the electrical network frequency obtained from the digital video **(100)** and the ground-truth is evaluated and the optimal value is selected as the time of recording. The preferred cost function for this application is the mean squared error between the sequence obtained from the digital video **(100)** and the ground-truth, once both sequences are resampled to a common sampling frequency and the final value of the estimated frame rate **(318)** has been obtained. The rule for the mean squared error is as follows:

$$J(\tau) = \frac{1}{N} \sum_{n=0}^{N-1} \left| f_\mathrm{c}\left(n\frac{T_\mathrm{fps}}{\tilde{T}_\mathrm{fps}}T_\mathrm{cr}\right) - f_\mathrm{e}(nT_\mathrm{cr} - \tau) \right|^2$$

with $f_\mathrm{c}\left(n\dfrac{T_\mathrm{fps}}{\tilde{T}_\mathrm{fps}}T_\mathrm{cr}\right)$ the sequence at the output (corrected frequency signal **(120)** provided by this invention **(120)**)..

Generally $\dfrac{T_\mathrm{fps}}{\tilde{T}_\mathrm{fps}} \approx 1$ .

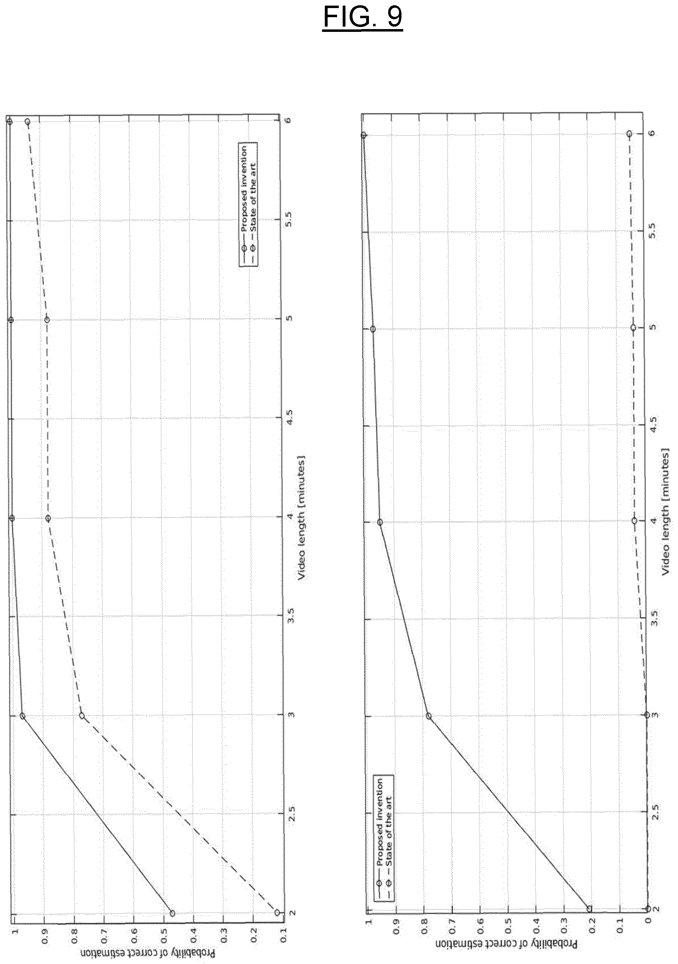

The probability of estimating the time of recording correctly, which has been computed empirically, is illustrated in Fig. 9 in terms of the duration of the video, for static (Fig. 9A) and non-static (Fig. 9B) videos, both for the present invention, represented in continuous line, and for the alternative in the state of the art, represented in dashed line. Even though for static videos there is only a moderate improvement, when the scenes are not static the proposed invention obtains clearly more favorable results than the relevant state of the art, allowing the use of the electrical network frequency in these scenarios, which in real-world applications are the most frequent.

**Claims**

1. A system for the extraction of the electrical network frequency in videos, consisting of a video processing module that operates individually over each pixel in order to mitigate the effects of the movement and characteristics of the scene such as variations in the illumination or presence of dark areas; the system being composed of:

   a. A pixel-level detection block that identifies those pixels that are representative of the variations of the electrical network frequency in each frame or in a given subset of each frame,
   b. A pixel-level processing and combining block, that processes said pixels and combines the results to obtain one temporal sequence in which only the components corresponding to the electrical network frequency or/and its harmonics are preserved.

2. The system according to Claim 1, further comprising an instantaneous frequency estimation module with at least one feedback processing step, either alone or combined with any other recursive or non-recursive estimation technique used with the purpose of providing diversity from different harmonics, wherein the temporal sequence is processed to obtain the frequency variations over time by taking into account the autoregressive character of the electric network frequency signal.

3. The system according to Claims 1 or 2, further comprising a preconditioning module that is applied to the temporal sequence in which the electrical network frequency is embedded, the preconditioning step being composed of any combination of the following blocks, in any order, being a possibility that any of them appear more than once and being possible that only one of them is employed:

   a. A step or a sequence of steps of equalization that homogenize the amplitude of the sequence over time,
   b. A step or a sequence of steps of linear or non-linear temporal processing whose objective is to detect and mitigate the sudden variations that are originated by neither the electrical network frequency nor any of its harmonics.

4. The system according to Claims 2 or 3, further comprising a set of linear processing blocks that isolate the component or components of interest in the temporal sequence prior to the instantaneous frequency estimation.

5. The system according to Claims 2, 3 or 4, further comprising a post-processing block for the output of the instantaneous frequency estimation system, this post-processing block comprising the operations of filtering, scaling and changing the mean and amplitude of the samples of the instantaneous frequency sequence in order to compare, using any cost function, said sequence with a ground-truth sequence obtained from trusted or untrusted sources or extracting statistical information from the output of the instantaneous frequency estimation system.

6. A method for the estimation of the characteristic frequency of the oscillator of a given digital camera employing the electrical network frequency obtained from a video recorded with said camera, that may be used without further information about the characteristic parameters of the camera that define the frame rate of said digital camera.

7. The system according to Claims 2, 3, 4 or 5, wherein the method according to claim 6 is used for the estimation of the frame rate if necessary.

8. A system for assessing the presence of electrical network frequency on digital videos employing a Generalized Likelihood Ratio Test detector.

9. A system according to Claim 8, wherein the electrical network frequency was extracted according to the system of Claims 2, 3, 4, 5 or 7 if necessary.

10. The system according to Claims 2, 3, 4, 5 or 7 in which the results of the extraction of the electrical network frequency are used to estimate the time and/or the geographical area of recording of a digital video.

11. The system according to Claims 2, 3, 4, 5 or 7 in which the results of the extraction of the electrical network frequency are used to perform tampering detection in a digital video and/or detect inconsistencies in its contents.

12. A method for the extraction of the electrical network frequency in videos, consisting of a video processing module that operates individually over each pixel in order to mitigate the effects of the movement and characteristics of the scene, such as variations in the illumination, or presence of dark areas; the method being composed of:

> a. A pixel-level detection block that identifies those pixels that are representative of the variations of the electrical network frequency in each frame or in a given subset of each frame,
> b. A pixel-level processing and combining block, that processes said pixels and combines the results to obtain one temporal sequence in which only the components corresponding to the electrical network frequency or/and its harmonics are preserved.
> c. An instantaneous frequency estimation module with at least one feedback processing step, either alone or combined with any other recursive or non-recursive estimation technique used with the purpose of providing diversity from different harmonics, wherein the temporal sequence is processed to obtain the frequency variations over time by taking into account the autoregressive character of the electric network frequency signal.

13. The method according to Claims 12, further comprising a preconditioning module that is applied to the temporal sequence in which the electrical network frequency is embedded, the preconditioning step being composed of any combination of the following blocks, in any order, being a possibility that any of them appear more than once and being possible that only one of them is employed:

> a. A step or a sequence of steps of equalization that homogenize the amplitude of the sequence over time.
> b. A step or a sequence of steps of linear or non-linear temporal processing whose objective is to detect and mitigate the sudden variations that are originated by neither the electrical network frequency nor any of its harmonics.
> c. A step of linear processing that isolates the component or components of interest in the temporal sequence prior to the instantaneous frequency estimation.
> d. A post-processing step for the output of the instantaneous frequency estimation system, this post-processing step comprising the operations of filtering, scaling and changing the mean and amplitude of the samples of the instantaneous frequency sequence in order to compare, using any cost function, said sequence with a ground-truth sequence obtained from trusted or untrusted sources or extracting statistical information from the output of the instantaneous frequency estimation system.

# FIG. 1

DIGITAL VIDEO — 100

102

VIDEO PROCESSING — 104

PIXEL-LEVEL DETECTOR — 106

PIXEL PROCESSING AND COMBINING — 108

PRECONDITIONING — 110

112

FRAME RATE ESTIMATION

INSTANTANEOUS FREQUENCY ESTIMATION — 114

SPECTRAL ESTIMATION — 116

POST-PROCESSING — 118

ELECTRICAL NETWORK FREQUENCY — 120

ENF EXTRACTION MODULE

# FIG. 2

# FIG. 3

DIFFERENCE OF LUMINANCE — 708

LIMITER — 300

FIRST STAGE FRAME RATE ESTIMATION RULE — 302

ESTIMATED FRAME RATE — 320

PRECONDITIONING AND DOWN-CONVERSION — 304

INSTANTANEOUS FREQUENCY ESTIMATION — 306

SPECTRAL ESTIMATION — 308

POST-PROCESSING — 310

REFERENCE DATABASE — 312

NCC-BASED TIME OF RECORDING ESTIMATION — 314

SECOND STAGE FRAME RATE ESTIMATION RULE — 316

ESTIMATED FRAME RATE — 318

EP 3 833 011 A1

FIG. 4

FIG. 5

24

## FIG. 6

## FIG. 7

## FIG. 8

# FIG. 9

# FIG. 10

PRECONDITIONER

110

SEQUENCE FROM VIDEO — 1000

NON-LINEAR PROCESSING — 1002

EQUALIZER — 1004

LINEAR PROCESSING — 1006

PRECONDITIONED SEQUENCE — 1010

Europäisches
Patentamt

European
Patent Office

Office européen
des brevets

# EUROPEAN SEARCH REPORT

Application Number

EP 19 38 3083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2015/356992 A1 (WU MIN [US] ET AL) 10 December 2015 (2015-12-10) | 1-7, 10-13 | INV. H04N5/91 |
| Y | * abstract * | 9 | G01R23/00 |
| A | * paragraph [0005] - paragraph [0010] * * paragraph [0023] - paragraph [0026] * * paragraph [0032] - paragraph [0035] * * paragraph [0047] - paragraph [0056] * * paragraph [0083] * * paragraph [0096] - paragraph [0124] * * paragraph [0134] - paragraph [0137] * * paragraph [0172] * * figures 1-8 * | 8 | G11B27/28 H04N5/913 |
| X | BYKHOVSKY D ET AL: "Electrical Network Frequency (ENF) Maximum-Likelihood Estimation Via a Multitone Harmonic Model", IEEE TRANSACTIONS ON INFORMATION FORENSICS AND SECURITY, IEEE, PISCATAWAY, NJ, US, vol. 8, no. 5, 1 May 2013 (2013-05-01), pages 744-753, XP011499662, ISSN: 1556-6013, DOI: 10.1109/TIFS.2013.2253462 | 8 | |
| Y | * abstract * | 9 | |
| A | * page 752 section 4) Detection * | 1-7, 10-13 | |
| A | Vlad Dragos-Darau: "TEMPORAL LOCALIZATION OF VIDEOS BASED ON MASSIVE ENF PROCESSING", , 30 June 2018 (2018-06-30), XP055683731, Retrieved from the Internet: URL:http://castor.det.uvigo.es:8080/xmlui/bitstream/handle/123456789/245/TFM%20Vlad-Dragos%20Darau.pdf?sequence=1&isAllowed=y [retrieved on 2020-04-07] * page 47 - page 48 * | 1-13 | |

TECHNICAL FIELDS SEARCHED (IPC)

H04N
G01R
G11B

The present search report has been drawn up for all claims

| Place of search | Date of completion of the search | Examiner |
|---|---|---|
| Munich | 8 April 2020 | Schreib, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 833 011 A1**

## ANNEX TO THE EUROPEAN SEARCH REPORT
## ON EUROPEAN PATENT APPLICATION NO.

EP 19 38 3083

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2020

| Patent document cited in search report | Publication date | Patent family member(s) | Publication date |
|---|---|---|---|
| US 2015356992 A1 | 10-12-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 103905816 B
- US 2018205922 A1
- US 2015052073 A1, Panezenkos
- US 2014147097 A1
- US 2015356992 A1

### Non-patent literature cited in the description

- **A. HAJJ-AHMAD et al.** Instantaneous frequency estimation and localization for ENF signals. *Proceedings of The 2012 Asia Pacific Signal and Information Processing Association Annual Summit and Conference,* 2012, 1-10
- **O. OJOWU et al.** ENF Extraction From Digital Recordings Using Adaptive Techniques and Frequency Tracking. *IEEE Transactions on Information Forensics and Security,* August 2012, vol. 7 (4), 1330-1338
- **L. DOSIEK.** Extracting Electrical Network Frequency From Digital Recordings Using Frequency Demodulation. *IEEE Signal Processing Letters,* June 2015, vol. 22 (6), 691-695
- **M. FUENTES et al.** Detection of ENF discontinuities using PLL for audio authenticity. *2016 IEEE 7th Latin American Symposium on Circuits & Systems (LAS-CAS),* 2016, 79-82
- Temporal localization of videos based on massive ENF processing. Master's Thesis of Vlad Dragos-Darau. University of Vigo, June 2018
- **VATANSEVER et al.** Detecting the Presence of ENF Signal in Digital Videos: A Superpixel-Based Approach. *IEEE Signal Processing Letters,* October 2017
- **HUI SU et al.** Exploiting rolling shutter for ENF signal extraction from video. *IEEE International Conference on Image Processing (ICIP),* 2014
- **S. VATANSEVER et al.** Analysis of Rolling Shutter Effect on ENF-Based Video Forensics. *IEEE Transactions on Information Forensics and Security,* September 2019, vol. 14 (9